# NEUE EUROPÄISCHE PATENTSCHRIFT

(11) **EP 0 340 751 B2**
(45) Veröffentlichungstag und Bekanntmachung des Hinweises auf die Entscheidung über den Einspruch: **21.11.2001**
(45) Hinweis auf die Patenterteilung: 07.08.1996
(21) Anmeldenummer: 89108018.6
(22) Anmeldetag: 03.05.1989
(51) Int. Cl.: F16C 29/06

(54) **Linearführungseinheit**
Linear guiding device
Unité de guidage rectiligne

(30) Priorität: 06.05.1988 DE 3815595
(43) Veröffentlichungstag der Anmeldung: 08.11.1989
(73) Patentinhaber: Deutsche Star GmbH, 97424 Schweinfurt (DE)
(72) Erfinder: Albert, Ernst,Dipl. Ing.(FH), D-8729 Sand/Main (DE)
(74) Vertreter: Herzog, Markus, Dipl.-Phys. Dr.

(56) Entgegenhaltungen:
- EP-A- 0 080 515
- EP-A- 0 106 826
- DE-A- 1 910 693
- DE-A- 2 914 756
- DE-A- 3 336 496
- DE-A- 3 631 401
- DE-A- 3 720 454
- DE-U- 8 715 922
- FR-A- 1 453 495
- FR-A- 2 302 446
- FR-A- 2 527 281

## Beschreibung

Linearführungseinheiten sind z.B. aus der DE-A1-30 13 410 bekannt. Ergänzend hierzu wird auf die DE-A1-30 40 711 und auf die DE-A1-33 36 496 verwiesen.

Gemeinsamer Grundgedanke der in diesen Schriften erwähnten Lösungen ist es, daß der Läufer auf der Führungsschiene durch Laufrollen rollend geführt ist, welche ihrerseits auf an dem Läufer fest angeordneten-Laufachsen drehbar gelagert sind. Dieser Grundgedanke geht offenbar von der verbreiteten Vorsteliung aus, daß durch das Führungsgehäuse die an dem Läufer gelagerten Laufrollen durch das Führungsgehäuse gekapselt sind, so daß es keiner besonderen Kapselung für die Laufrollen bedarf und daß man deshalb die Laufrollen in einfacher Weise an einem einfach geformten Läufer, sozusagen offen, anbringen kann.

Zur Linearführung eines Läufers ist es seit vielen Jahren weiterhin bekannt, zwischen dem Läufer und einer Führungsschiehe Wälzkörperumläufe anzuordnen, wobei jeder dieser Wälzkörperumläufe eine geradlinige, last übertragende Wälzkörperreihe in Eingriff mit einer achsparallelen lastaufnehmenden Laufbahn des Läufers und mit einer achsparallelen, lastaufnehmenden Laufbahn der Führungsschiene und ferner eine rücklaufende Wälzkörperreihe sowie zwei Bogenwälzkörperreihen aufweist. Diese bekannte Ausführungsform führt zwangsläufig zu einer Kapselung der Wälzkörperumläufe zwischen dem Läufer und der Führungsschiene und wird deshalb gerade dann angewandt, wenn eine anderweitige Kapselung nicht vorhanden oder nicht möglich ist, d.h. also dann, wenn der Läufer offen auf der Führungsschiene läuft.

Daneben sind aus der EP-A1-106 826 auch Linearführungen bekannt, bei denen der durch einen Spindeltrieb angetriebene Läufer innerhalb eines Führungsgehäuses durch Lineargleitlager auf Führungsprofilleisten innerhalb des Führungsgehäuses geführt ist, diese Führungsprofilleisten mit einer Verschleißschicht beschichtet sind und an dem Läufer Führungshülsen angebracht sind, welche auf den Führungsprofilleisten, diese teilweise umgreifend, gleitend geführt sind.

Ausgangspunkt der Erfindung ist eine Linearführungseinheit, umfassend ein längliches Führungsgehäuse mit einer Längsachse und mit einen Führungshohlraum begrenzenden Wänden, nämlich einer Bodenwand und zwei Seitenwänden, wobei die beiden Seitenwände zwischen sich eine der Bodenwand gegenüberliegende Längsöffnung des Führungshohlraums bilden, ferner umfassend eine an der Bodenwand innerhalb des Führungshohlraums befestigte. achsparallele Führungsschiene und eine auf dieser Führungsschiene rollend geführte und gegen Kippen um die Längsachse gesicherte Läuferbaugruppe, wobei diese Läuferbaugruppe durch die Längsöffnung hindurch mit einem ersten Anschlußteil verbindbar ist, wobei weiter ein Linearantrieb zur Bewegung der Läuferbaugruppe in Richtung der Längsachse vorgesehen ist, wobei weiter in der die Führungsschiene teilweise umgreifenden Läuferbaugruppe mindestens zwei Wälzkörperumläufe angeordnet sind,
wobei weiter diese Wälzkörperumläufe jeweils eine geradlinige, lastübertragende Wälzkörperreihe in Eingriff mit einer achsparallelen, lastaufnehmenden Laufbahn der Läuferbaugruppe und mit einer achsparallelen, lastaufnehmenden Laufbahn der Führungsschiene und ferner jeweils eine rücklaufende Wälzkörperreihe sowie zwei Bogenwälzkörperreihen aufweisen.

Eine solche Linearführungseinheit sowie ein Führungsgehäuse gemäß dem Oberbegriff des Anspruchs 47 ist aus der EP-A1-80 515 bekannt.

Bei der bekannten Linearführungseinheit nach der EP-A1-80 515 ist eine aus einer Basisleiste, einer Klemmleiste und einer Mittelleiste sowie Führungsstäben mehrteilig zusammengesetzte Führungsschiene mit ihrer Basisleiste flach und seitlich ungeführt auf der Innenseite der Bodenwand aufliegend an der Bodenwand durch Bolzen befestigt, welche die Klemmleiste, die Mittelleiste und die Basisleiste durchsetzen, mit ihren Gewindeschäften in eine unterseitige Schwalbenschwanznut der Bodenwand eintauchen und innerhalb dieser Schwalbenschwanznut mit Muttern verschraubt sind. Die Läuferbaugruppe ist dabei von einem Hohlprofilkörper gebildet, welcher sich in Höhenrichtung des Führungsgehäuses von der Oberseite der Klemmleiste bis über die bodenwandfernen Endflächen der Seitenwände hinaus erstreckt und dort in einer auf die Breite des Führungsgehäuses beschränkten, oberen Begrenzungsfläche Verbindungsmittel in Form von T-Nuten zum Anschluß eines Anschlußteils trägt. Das Führungs-gehäuse ist mit Verbindungsmitteln zur Verbindung mit einem weiteren Anschlußteil ausgeführt, so daß die beiden Anschlußteile relativ zueinander linear geführt werden können. An dem Hohlprofilkörper sind seitlich der Führungsschiene zur Bodenwand hin vorstehend Träger von Wälzkörperumläufen durch Schraubbolzen befestigt, welche mit lastübertragenden Wälzkörperreihen an den Führungsstäben in führendem Abwälzeingriff anliegen. Der Hohlraum des Hohlprofilkörpers nimmt den Zentralraum des Hohlprofilkörpers ein. Dieser Hohlraum ist an die Form des Linearantriebs spezifisch angepaßt.

Der Erfindung liegt die Aufgabe zugrunde, eine Linearführungseinheit mit den vorstehend aufgezählten Merkmalen des Oberbegriffs von Anspruch 1 so auszubilden, daß bei vertretbarem Aufwand eine erhöhte Belastbarkeit und eine hohe Positionierungsgenauigkeit erreicht werden.

Zur Lösung dieser Aufgabe wird erfindungsgemäß vorgeschlagen, daß
a) die Führungsschiene in eine Bodennut in der Bodenwand eingesetzt und in dieser gegen Ausheben gesichert ist;
b) die Läuferbaugruppe einen Läufer und einen Verbindungskörper aufweist;
c) der Läufer eine U-förmige Grundgestalt besitzt, welche mit ihrem Steg an der befestigungsfemen Seite der Führungsschiene und mit ihren Schenkeln an den zu der Bodenwand des Führungsgehäuses im wesentlichen senkrechten Seitenflächen der Führungsschiene benachbart liegt;
d) die Schenkel des Läufers an dem Steg einstückig angeordnet sind;
e) der Steg im wesentlichen Vollquerschnitt besitzt;
f) eine von der Bodenwand abgelegene Anschlußfläche des Stegs unterhalb der bodenwandfernen Endflächen der Seitenwände liegt;
g) auf dieser Anschlußfläche der Verbindungskörper (20) befestigt ist, welcher seinerseits Verbindungsmittel zur Verbindung mit dem ersten Anschlußteil aufweist, und
h) die Verbindung des Linearantriebs mit der Läuferbaugruppe (18,20) im Höhenbereich des Verbindungskörpers (20) hergestellt ist.

Durch die Erfindung wird eine kompakte, auch unter Last präzis führende Linearführungseinheit hoher Positionierungsgenauigkeit geschaffen, die sich preisgünstig herstellen läßt und hohe Verfahrgeschwindigkeiten zuläßt. Die Führungsschiene, ggf. bereits zu einer Baueinheit mit dem Läufer vereint, kann leicht, exakt und maßhaltig in der Bodennut gemäß Merkmal a) festgelegt werden, wie dies insbesondere beim Bau von Werkzeugmaschinen, Handhabungsgeräten und dgl. gefordert ist.

Durch Kombinationen gemäß Merkmal b) läßt sich eine Anpassung an das jeweilige Format des Führungsgehäuses mit reduziertem Fertigungsaufwand vornehmen.

Die Merkmale c), d) und e) ergeben eine einfache und kompakte Bauform des Läufers, wobei Voraussetzung für das Merkmal e) ist, daß gemäß Merkmal h) die Verbindung des Linearantriebs mit der Läuferbaugruppe im Höhenbereich des Verbindungskörpers hergestellt ist. Andererseits kann dank der Merkmale f) und g) der im Höhenbereich des Verbindungskörpers mit der Läuferbaugruppe verbundene Linearantrieb in dem Führungshohlraum aufgenommen sein. Überdies erlauben die Merkmale c), d) und e), auf bewährte, kompakte Läuferbauformen zurückzugreifen, beispielsweise auf Lagerhauptkörper von Linearbewegungswälzlagern. nach der DE-A1-36 20 571, welche als handelsübliche Serienelemente zu Verfügung stehen, wobei deren Konstruktionsmerkmale durchwegs übemommen werden könnten.Der Läufer mit am Steg einstükkig angeschlossenen Schenkeln gemäß Merkmal d) zeichnet sich weiterhin durch hohe Tragfähigkeit, hohe Drehmomentbelastbarkeit, insbesondere Kippsteifigkeit um die Längsachse des Führungsgehäuses, und lange Lebensdauer aus. Die Wälzkörperumläufe sind gekapselt. Darüberhinaus ist die Läuferbaugruppe in dem Führungshohlraum gekapselt und damit geschützt. Die Wälzkörperreihen können spielfrei sein und gewünschtenfalls unter Vorspannung stehen.

Es ist möglich, daß der Verbindungskörper im wesentlichen T-förmig ausgebildet ist mit einem an den Steg angrenzenden Mittelschenkel und mit Querschenkeln, welche die von der Bodenwand abgelegenen Endflächen der Seilenwände überlagern. Durch diese Maßnahme wird eine große Basis für die Anbringung des jeweiligen Anschlußteils geschaffen, was wiederum - im Sinne der oben formulierten Aufgabe - zu der Positioniergenauigkeit beiträgt. Überdies wird dadurch, daß die Querschenkel des T-förmigen Gebildes die von der Bodenwand abgelegenen Endflächen der Seitenwände überlagem, der Aufwand im Sinne der oben formulierten Aufgabe insofern reduziert, als die Anbringung des jeweiligen Anschlußteils erleichtert wird. Besonders vorteilhaft ist es, wenn in den überlagernden Teilen der Querschenkel Verbindungsmittel zur Verbindung mit einem ersten Anschlußteil vorgesehen sind.

Eine besonders hohe Lastaufnahmefähigkeit gegenüber Kipp- und Drehmomentbelastungen kann erreicht werden dadurch, daß an zwei zueinander annähernd parallelen Seitenflächen der Führungsschiene, welche zu der Bodenwand annähernd senkrecht stehen, je zwei lastaufnehmende Laufbahnen der Führungsschiene für die lastübertragenden Wälzkörperreihen von insgesamt vier Wälzkörperumläufen angeordnet sind, etwa in der Weise, daß die auf ein und derselben Seitenfläche der Führungsschiene gelegenen Laufbahnen der Führungsschiene an den Flanken von jeweils einer in die jeweilige Seitenfläche der Führungsschiene eingearbeiteten achsparallelen Längsnut gebildet sind.

Im Hinblick auf eine einfache Herstellung der Verbindung zwischen Stegteil und Verbindungskörper ist es möglich, daß der Steg mit Verbindungsmitteln zur Befestigung des Verbindungskörpers ausgeführt ist. Für die Vielseitigkeit des Einsatzes erfindungsgemäßer Linearführungseinheiten ist es vorteilhaft, wenn das Führungsgehäuse in bezug auf eine seine Längsachse enthaltende, zu der Bodenwand senkrechte Symmetrieebene im wesentlichen symmetrisch ausgebildet ist und daß die Läuferbaugruppe bezüglich dieser Symmetrieebene ebenfalls im wesentlichen symmetrisch ausgebildet ist.

Um das Führungsgehäuse ohne weitere Anpassungsmaßnahmen vielseitig einsetzen und leicht in der jeweiligen Einbauumgebung fixieren zu können, ist vorgesehen, daß die Wände des Führungsgehäuses an ihren von dem Führungshohlraum abgelegenen Außenflächen Verbindungsmittel zur Verbindung mit einem zweiten Anschlußteil tragen. Diese Möglichkeit ist an sich aus den Schriften DE-A1-30 13 410, DE-A1-30 40 711 und DE-A1-33 36 496 bekannt. Dabei können, wie aus den genannten Schriften ebenfalls bekannt, die Verbindungsmittel, auch solche der Läuferbaugruppe, hinterschnittene, zur Längsachse des Führungsgehäuses parallel verlaufende T-Nuten sein.

Im Hinblick auf einfache und wirtschafliche Herstellung der Führungsgehäuse wird vorgeschlagen, daß das Führungsgehäuse als Strangprofil, insbesondere Leichtmetallstrangprofil, hergestellt ist, wie dies aus DE-A1-30 13 410, DE-A1-30 40 711 und DE-A1-33 36 496 ebenfalls bekannt ist.

Um die Führungspräzision und Leichtgängigkeit über lange Betriebszeit hinweg zu erhalten, wird vorgeschlagen, daß die Führungsschiene eine Stahlschiene ist. Die Führungsschiene läßt sich in diesem Fall leicht härten.

Die Führungsschiene kann mit der jeweiligen Wand durch Verschraubung oder Verklemmung verbunden sein etwa so, daß die Führungsschiene an der jeweiligen Wand durch Schraubbolzen befestigt ist, welche die jeweilige Wand durchsetzen und an der Außenfläche der jeweiligen Wand Widerlagermittel aufweisen, z.B. eine Widerlagerschiene.

Bestehen das Führungsgehäuse und die Führungsschiene aus den oben angegebenen Gründen aus verschiedenen Werkstoffen, so empfiehlt es sich, daß die Widerlagerschiene aus dem gleichen Material besteht wie die Führungsschiene. Dies bedeutet, daß einer Führungsschiene aus Stahl auf der anderen Seite der beispielsweise aus Leichtmetall gefertigten Wand wiederum eine Widerlagerschiene aus Stahl gegenübersteht und damit Bimetalleffekte vermieden werden.

Der Linearantrieb kann beispielsweise von einem flexiblen Zugmittel gebildet sein, welches von der Läuferbaugruppe ausgehend über je eine Umlenkrolle im Bereich beider Enden des Führungsgehäuses zurück zur Läuferbaugruppe geführt ist.

Dabei ist es montagemäßig von Vorteil, wenn das flexible Zugmittel offen und mit seinen beiden Enden an der Läuferbaugruppe befestigt ist.
Ist ein flexibles Zugmittel als Teil des Linearantriebs vorgesehen, so kann dieses mit seinem nicht mit der Läuferbaugruppe verbundenen Mitteltrum außerhalb des Führungshohlraums verlaufen etwa in einer entlang der Längsachse sich erstreckenden Mitteltrum-Aufnahmekammer des Führungsgehäuses. Diese kann dabei im Strangpreß-Herstellungsverfahren hergestellt werden, Bevorzugt ist sie von dem Führungshohlraum durch die Bodenwand getrennt, wobei die Mitteltrum-Aufnahmekammer im Bereich der Bodenwand zwischen Verbindungsmitteln angeordnet sein kann, welche an der Auβenseite der Bodenwand angeordnet sind. Aus Herstellungsgründen insbesondere aber im Hinblick auf die leichte Anbringung von Widerlagem der Führungsschienenbefestigung, empfiehlt es sich, daß die Mitteltrum-Aufnahmekammer - in einem zur längsachse senkrechten Schnitt betrachtet - eine Öffnung in Richtung des das Führungsgehäuse umschließenden Außenraums besitzt. Dabei ist es möglich, daß die Öffnung der Mitteltrum-Aufnahmekammer durch einen Deckel verschlossen ist etwa in der Weise, daß der Deckel in Deckelhaltenuten des Führungsgehäuses aufgenommen ist.

Die Führung des Mitteltrums in einer Mitteltrum-Aufnahmekammer bringt einerseits einen Schutz für dieses Mittel trum, außerdem erleichtert sie die Anbringung der Führungsschiene innerhalb des Linearführungsgehäuses und die Verbindung der Außenseiten des Linearführungsgehäuses mit zugehörigen Anschlußteilen. Die Verwendung eines Deckels für die Mitteltrum-Aufnahmekammer gibt einerseits Schutz für das flexible Zugmittel und läßt andererseits die Möglichkeit eines Zugriffs zu diesem Mitteltrum für Reparatur- und Wartungszwecke zu.

Zur verbesserten Kapselung des Gesamtsystems und Unterdrückung von Schwingungen des flexiblen Zugmittels kann es von Vorteil sein, wenn die zwischen der Läuferbaugruppe und den Umlenkrollen sich erstreckenden Abschnitte des flexiblen Zugmittels an ihren in Achsrichtung der Umlenkrollen beabstandeten Rändern durch Profilleisten wenigstens teilweise umgriffen sind. Dabei können die Profilleisten an den Seitenwänden des Führungsgehäuses im Bereich der Längsöffnung angeordnet und aufeinander zu gerichtet sein. Die Profilleisten können von dem Führungsgehäuse gesondert, insbesondere aus Kunststoff, hergestellt sein und an dem Führungsgehäuse befestigt sein etwa in der Weise, daß die Profilleisten einen H-Profil-Querschnitt besitzen, wobei die jeweils eine H-Profil-Nut einen Längsrand des flexiblen Zugmittels umgreift und die die jeweils andere H-Profil-Nut begrenzenden Profilschenkel mit entsprechenden Randwülsten in T-Nulen des Führungsgehäuses eingerastet sind. Diese Lösung hat auch den Vorteil, daß sie die Kombination unterschiedlicher Zugmittel mit ein und demselben Führungsgehäuse erleichtert.

Als flexible Zugmittel kommen beispielsweise Ketten oder Zahnriemen in Frage.

Um für die Unterbringung der Umlenkrollen möglichst wenig Eingriffe in dem Führungsgehäuse vornehmen zu müssen, wird empfohlen, daß mindestens eine der Umlenkrollen in einem Umlenkrollengehäuse untergebracht ist, welches an einer zur Längsachse im wesentlichen senkrechten Endfläche des Führungsgehäuses angeordnet ist. Auch diese Weiterbildung ist aus der US-A-2 736 553 und der DE-A1-33 36 496 jeweils für sich bekannt.

Um gleichwohl eine Befestigungsmöglichkeit des Führungsgehäuses auch im Bereich des Umlenkrollengehäuses zu schaffen, wird vorgeschlagen, daß das Umlenkrollengehäuse, in seinem zur Längsachse des Führungsgehäuses senkrechten Querschnitt betrachtet, im wesentlichen querschnittsgleich mit der Außenkontur des Führungsgehäuses ist. Insbesondere können etwaige der Befestigung eines Anschlußteils dienende T-Nuten im Bereich des Umlenkrollengehäuses fortgesetzt sein.

An mindestens einem Umlenkrollengehäuse kann eine Antriebseinheit befestigt sein.

Um die Spannung des flexiblen Zugmittels justieren zu können, wird entsprechend bekannten Vorschlägen aus der US-A-2 736 553 und der DE-A1-33 36 496 mindestens eine Umlenkrolle in Richtung der Längsachse verstellbar ausgeführt.

Um das Eindringen von Schmutz in das Führungs-gehäuse zu verhindern, wird vorgeschlagen, daß an der Verbindungsstelle zwischen dem Führungsgehäuse und dem Umlenkrollengehäuse im Bereich der Längsöffnung des Führungsgehäuses eine mit dem flexiblen Umlenkmittel zusammenwirkende Dichtung angeordnet ist. Die Anbringung von Dichtungsmitteln ist zwar aus der GB-A- 887 114 und der DE-A1-33 36 496 an sich bekannt. Dabei sind die Dichtungsmittel aber an den Längsrändern der Längsöflnung angebracht. Es wurde gefunden, daß die kritische Stelle für die Schutzabdichtung dort liegt, wo das flexible Umlenkmittel schmutzfördernd in das jeweilige Umlenkrollengehäuse eintritt.

Um das Mitteltrum des flexiblen Umlenkmittels auf seinem ganzen Weg bis hin an die Umlenkrollen vor.Berührung möglichst zu schützen, wird vorgeschlagen, daß die Mitteltrum-Aufnahmekammer an mindestens einem Ende in den Innenraum eines Umlenkrollengehäuses mündet.

Für den Linearantrieb stehen auch weitere Möglichkeiten zur Verfügung: Ein Spindelbetrieb, wie beispielsweise aus der EP-A1-106 826 bekannt, ein Kugelschraubtrieb, wie beispielsweise aus der DE-A1-29 14 756 bekannt, Ketten- und Riementriebe, wie beispielsweise aus der US-A- 2 736 553 oder der DE-A1-33 36 496 bekannt, und Zahnstangentriebe, wie aus der DE-A1-30 13 410 bekannt. Insbesondere ist vorgesehen, daß der Linearantrieb von einem Spindeltrieb gebildet ist mit einer sich in Längsrichtung des Führungsgehäuses erstreckenden, an dem Führungsgehäuse axial fest und drehbar gelagerten, mit einem Drehantrieb verbundenen Spindel und einem an der Läuferbaugruppe befestigten Mutternkörper.

Im Hinblick auf eine leichtgängige und exakte Positionierung ist es vorteilhaft, wenn ein Spindeltrieb als Kugelschraubtrieb ausgebildet ist, wobei der Mutternkörper eine durch die Spindel zu einem schraubenförmigen Kugellaufkanal ergänzte innere schraubenförmige Nut aufweist und eine Schar von endlos umlaufenden Kugeln aufnimmt, wobei in dem Mutternkörper ein im wesentlichen axial verlaufender Kugelrückführkanal untergebracht ist und wobei der Mutternkörper in einem auf dem Steg befestigten Verbindungskörper der Läuferbaugruppe aufgenommen ist.

Für eine einfache Wartung der Linearführungseinheit ist es vorteilhaft, wenn das Führungsgehäuse in einer der Seitenwände eines gewünschtenfalls durch einen Deckel verschließbare Öffnung aufweist, durch welche ein Schmiernippel des Läufers zum Zwecke der Schmiermittelzufuhr zugänglich gemacht werden kann. Dabei ist es möglich, daß der Schmiernippel zur Schmierung von Wälzkörperumläufen und/oder eines Linearantriebs, insbesondere des Mutternkörpers eines Kugelschraubtriebs, vorgesehen ist.

Bevorzugt ist vorgesehen, daß das Führungsgehäuse im Querschnitt betrachtet einen im wesentlichen rechteckigen Umriß besitzt; insbesondere ist dabei vorgesehen, daß der Umriß des Führungsgehäuses im wesentlichen quadratisch ist.

Zur Gewichtsersparnis kann vorgesehen sein, daß das als Strangprofil hergestellte Führungsgehäuse im Übergangsbereich zwischen der Bodenwand und den Seitenwänden mit Hohlräumen versehen ist. Eine Optimierung sowohl hinsichtlich der Gewichtsersparnis als auch hinsichtlich der Belastbarkeit der gesamten Linearführungseinheit ist dadurch möglich, daß die Hohlräume zum Führungshohlraum hin durch Wandteile begrenzt sind, welche von der Bodenwand zu den Seitenwänden schräg verlaufen, insbesondere wenn die schräg verlaufenden Wandteile an Außenabschrägungen der Schenkel der Läuferbaugruppe angenähert sind.

Als eine Voraussetzung für die Lösung der oben formulierten Aufgabe betrifft die Erfindung weiter ein Führungsgehäuse für eine Linearführungseinheit gemäß Anspruch 47.

Nach einem weiteren Aspekt betrifft die Erfindung eine Linearführungseinheit umfassend ein längliches Führungsgehäuse mit einer Längsachse und mit einem Führungshohlraum begrenzenden Wänden, nämlich einer Bodenwand und zwei Seitenwänden, wobei die beiden Seitenwände zwischen sich eine der Bodenwand gegenüberliegende Längsöffnung des Führungshohlraums bilden, ferner umfassend eine an der Bodenwand innerhalb des Führungshohlraums befestigte, achsparallele Führungsschiene und einen auf dieser Führungsschiene rollend geführten und gegen Kippen um die Längsachse gesicherten, Läufer, wobei dieser Läufer durch die Längsöffnung hindurch mit einem ersten Anschlußteil verbindbar ist, wobei weiter ein Linearantrieb zur Bewegung des Läufers in Richtung der Längsachse vorgesehen ist, wobei weiter in dem die Führungsschiene teilweise umgreifenden Läufer mindestens zwei Wälzkörperumläufe vorgesehen sind, wobei weiter diese Wälzkörperumläufe jeweils eine geradlinige, lastübertragende Wälzkörperreihe in Eingriff mit einerachsparallelen, lastaufnehmenden Laufbahn des Läufers und mit einer achsparallelen, lastaufnehmenden Laufbahn der Führungsschiene und ferner je eine rücklaufende Wälzkörperreihe sowie zwei Bogenwälzkörperreihen aufweisen, wobei weiter der Linearantrieb von einem flexiblen Zugmittel gebildet ist, welches von dem Läufer oder einem mit dem Läufer verbundenen Verbindungskörper ausgehend über je eine Umlenkrolle im Bereich beider Enden des Führungsgehäuses zurück zum Läufer bzw. zum Verbindungskörper geführt ist und wobei das von Umlenkrolle zu Umlenkrolle verlaufende, nicht mit dem Läufer bzw. dem Verbindungskörper verbundene Mitteltrum des flexiblen Zugmittels außerhalb des Führungshohlraums in einer entlang der Längsachse sich erstreckenden Mitteltrum-Aufnahmekammer des Führungsgehäuses verläuft, welche von der Führungsschiene durch die Bodenwand getrennt ist.

Die eingangs formulierte Aufgabe wird auch unter diesem Aspekt erfüllt insofern, als durch die geschützte Anordnung des flexiblen Zugmittels in der Mitteltrum-Aufnahmekammer Umweltbelastungen auf das flexible Zugmittel ausgeschaltet sind, so daß eine erhöhte Belastbarkeit und eine hohe Positioniergenauigkeit erreicht werden.

Die beiliegenden Figuren erläutern die Erfindung anhand eines Ausführungsbeispiels; es stellen dar:
- Figur 1: Eine perspektivische Ansicht einer erfindungsgemäßen Linearführungseinheit;
- Figur 2: einen Schnitt durch das Führungsgehäuse;
- Figur 3a: einen Schnitt durch eine Profilleiste zur Führung eines flexiblen Zugmittels;
- Figur 3b: eine Abwandlung zur Figur 3a in einem entsprechenden Schnitt;
- Figur 4a: einen Querschnitt durch die Führungsschiene und den Läufer;
- Figur 4b: eine Ansicht in Pfeilrichtung IV b zu Figur 4a;
- Figur 5: einen Querschnitt durch das Führungsgehäuse mit eingebäuter Führungsschiene;
- Figur 6: eine Endansicht eines Verbindungskörpers zum Aufbau auf den Läufer;
- Figur 7: einen Gesamtquerschnitt durch die fertig montierte Linearführungseinheit;
- Figur 8: einen Längsschnitt nach Linie VIII - VIII der Figur 7 und
- Figur 9: einen Querschnitt durch eine abgewandelte Ausführungsform.

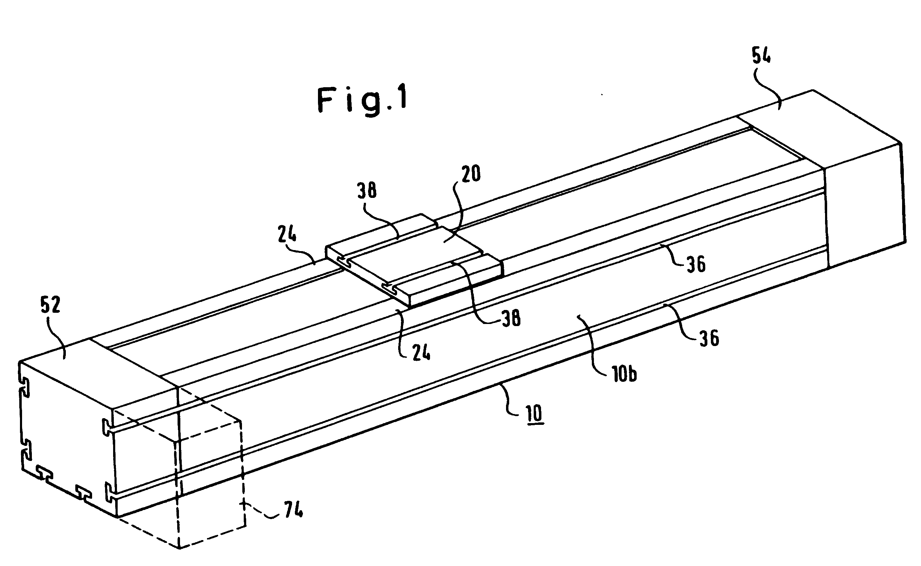

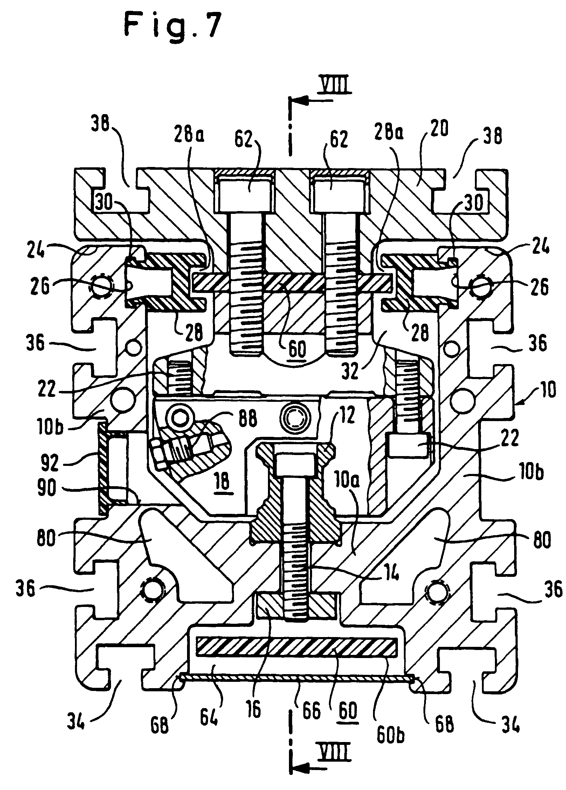

Es wird zunächst auf die Darstellung der Figuren 1, 7 und 8 Bezug genommen. Ein Führungsgehäuse ist mit 10 bezeichnet. Dieses Führungsgehäuse 10 erkennt man insbesondere in Figur 7.

Das Führungsgehäuse 10 umfaßt eine Bodenwand 10a und zwei Seitenwände 10b. Auf der Innenfläche der Bodenwand 10a ist eine Führungsschiene 12 angebracht durch Bolzen 14, welche die Bodenwand 10a durchsetzen und mit einer Widerlagerschiene 16 verschraubt sind. Auf der Führungsschiene 12 ist ein Läufer 18 verschiebbar geführt. Auf die Art der Führung wird späternoch eingegangen. Auf dem Läufer 18 ist ein Verbindungskörper 20 durch Schraubenbolzen 22 befestigt. Der Verbindungskörper 20 ist T-förmig und überragt die Endflächen 24 der Seitenwände 10b. An den Innenflächen der Seitenwände 10b sind hinterschnittene T-Nuten 26 vorgesehen, in welchen H-förmige Profilleisten 28 vermittels Längswulsten 30 eingerastet sind. Innerhalb des Führungsgehäuses 10 ist ein Führungshohlraum 32 gebildet, in welchem der Läufer 18 und ein Teil des Verbindungskörpers 20 untergebracht ist. An den Außenflächen der Bodenwand 10a und der Seitenwände 10b sind T-Profilnuten 34 und 36 vorgesehen, welche der Befestigung des Führungsgehäuses 10 an einer Grundkonstruktion dienen. In dem Verbindungskörper 20 sind T-Profilnuten 38 vorgesehen, welche der Verbindung des Verbindungskörpers 20 mit einem gegenüber der Konstruktion zu führenden Teil (nicht dargestellt) dienen.

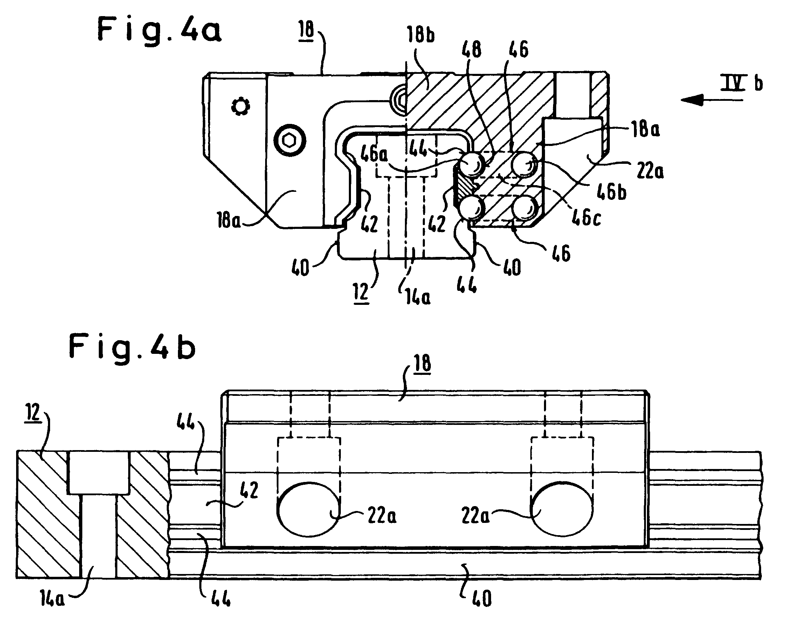

Zur Führung des Läufers 18 auf der Führungsschiene 12 wird nunmehr verwiesen auf die Figur 4a und 4b. Die Führungsschiene 12 weist in ihren beiden Seitenflächen 40 je eine Nut 42 auf. An den Flanken dieser Nuten 42 sind lastaufnehmende Laufbahnen 44 der Führungsschiene 12 ausgebildet. In dem Läufer 18 sind insgesamt 4 Kugelumläufe 46 untergebracht. Jeder Kugelumlauf 46 besteht aus einer lastübertragenden Kugelreihe 46a, einer rücklaufenden Kugelreihe 46b und zwei Bogenkugelreihen 46c. Die lastübertragende Kugelreihe 46a steht im Eingriff mit der lastaufnehmenden Laufbahn 44 der Führungsschiene 12 und mit einer lastaufnehmenden Laufbahn 48 des Läufers 18. Die rücklaufende Kugelreihe 46b und die Bogenkugelreihen 46c sind innerhalb der Schenkel 18a des Läufers 18 geführt. Wegen näherer Einzelheiten wird auf die DE OS 36 20 571 verwiesen. Durch die Kugelumläufe 46 ist der Läufer i8 auf der Führungsschiene 12 geführt. Bei einer Verschiebung des Läufers 18 entlang der Führungsschiene 12 laufen die Kugeln der Kugelumläufe in geschlossener Schleife um. Durch die in Figur 4a angedeutete Lage der lastübertragenden Laufbahnen 44 und 48 der Führungsschiene 12 bzw. des Läufers 18 ist der Läufer gegen ein Kippen in der Ebene der Figur 4a mit hoher Kipp-steifigkeit gesichert. Dabei sind die Schenkel 18a des Läufers durch den Steg 18b des Läufers biegesteif verbunden. In den Figuren 4a und 4b erkennt man an dem Läufer 1B abgesetzte Bohrungen 22a zur Aufnahme der Befestigungsbolzen 22, welche die Verbindung mit dem Verbindungskörper 20 herstellen.

Weiter erkennt man in den Figuren 4a und 4b Bohrungen 14a zur Aufnahme von die Führungsschiene 12 gemäß Figur 7 an der Bodenwand 10a befestigenden Bolzen 14.

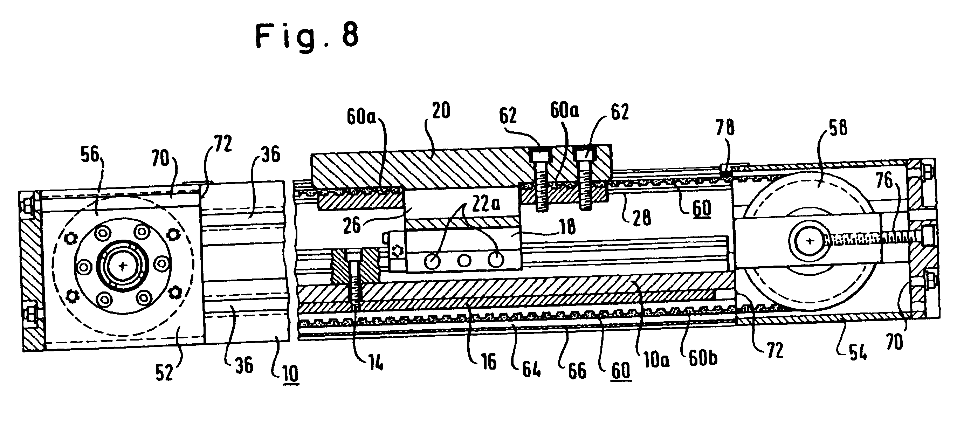

Der Läufer 18 ist durch einen Linearantrieb antreibbar. An den Enden des Führungsgehäuses 10 sind wie aus Figur 1 und 8 erkennbar Umlenkrollengehäuse 52 und 54 angebracht. In diesen Umlenkrollengehäusen sind die Umlenkrollen 56 und 58 drehbar gelagert. Über die Umlenkrollen 56 und 58 läuft ein Zahnriemen 60, dessen Enden 60a an dem Verbindungskörper 20 durch Verankerungsschrauben 62 verankert sind. Die Ränder der Endabschnitte 60a des Zahnriemens 60 sind, wie aus Figur 7 ersichtlich, in Nuten 28a der H-Profilleisten 28 geführt. Das von dem Läufer 18 ferne Mitteltrum 60b des Zahnriemens 60 verläuft zwischen den beiden Umlenkrollen 56 und 58 in einer Mitteltrumaufnahmekammer 64 der Bodenwand 10a. Diese Mitteltrumaufnahmekammer 64 ist durch einen Deckel 66 verschlossen, welcher in Deckelhaltenuten 68 der Bodenwand 10a gehalten ist. Die Mitteltrumaufnahmekammer 64 ist, wie aus Figur 8 ersichtlich, zu den Innenräumen der Umlenkrollengehäuse 52 und 54 hin offen, so daß das Mittel trum 60b des Zahnriemens 60 auf seiner ganzen Länge gekapselt verläuft. Die Umlenkrollengehäuse 52 und 54 sind durch Spannbolzen 70 in den Endflächen 72 des Führungsgehäuses 10 verankert. An dem Umlenkrollengehäuse 52 ist, wie aus Figur 1 zu ersehen, ein Gehäuse 74 einer Antriebseinheit angeflanscht, welche einen Schrittschaltmotor für die Umlenkrolle 56 trägt.

Die Umlenkrolle 58 ist durch den Spannbolzen 76 verstellbar, um den Zahnriemen 60 auf Spannung zu halten. Am Eingang des Zahnriemens 60 in das Umlenkrollengehäuse 54 erkennt man ein Dichtungselement 78.

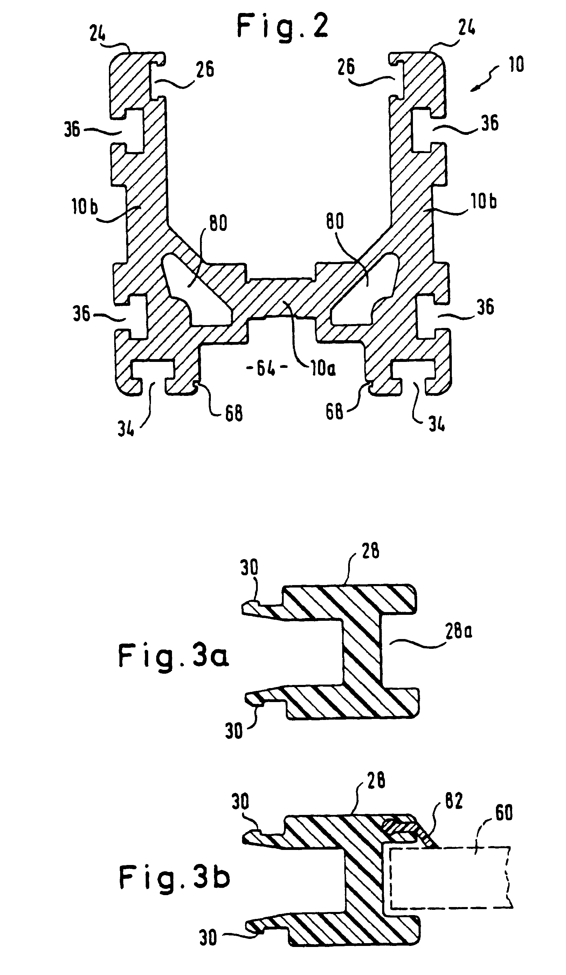

Die in Figur 2 erkennbaren Hohlräume 80 dienen der Gewichtseinsparung.

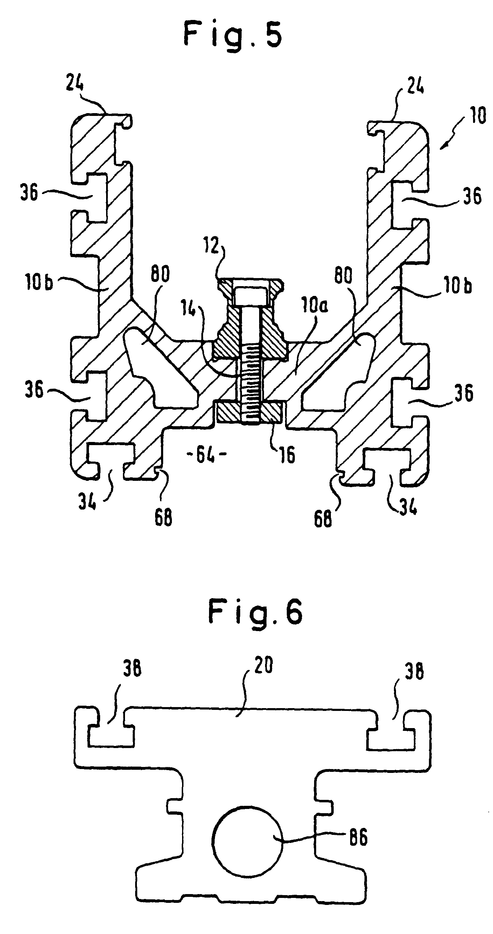

Figur 3b läßt erkennen, daß an den Profilleisten 28 noch Dichtleisten 82 angebracht sein können, welche an dem Zahnriemen 60 anliegen. Die in Figur 6 angedeutete Bohrung 86 des Verbindungskörpers 20 dient der Gewichtseinsparung. In Figur 7 erkennt man einen Schmiernippel 88 der zum Schmieren der Kugelumläufe gemäß Figur 4a dient. Dieser Schmiernippel 88 kann durch eine Öffnung 90 in einer Seitenwand 10b nach Öffnen des Deckels 92 zugänglich gemacht werden.

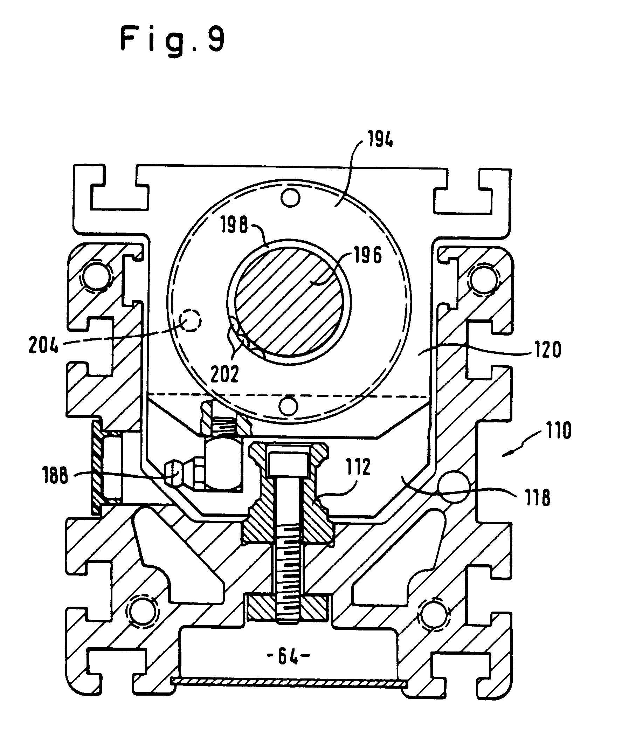

In Figur 9 ist eine abgewandelte Ausführungsform dargestellt. Das Führungsgehäuse 110 ist genauso ausgebildet wie in Figur 7. Der Läufer 118 ist auch hier auf einer Führungsschiene 112 geführt. Obwohl ein Zahnriemen nicht vorhanden ist, erkennt man die Mitteltrum-aufnahmekammer 64, damit das Führungsgehäuse wahlweise für die Ausführungsform der Figuren 7 und 9 verwendet werden kann. In dem Verbindungskörper 120 ist ein Mutternkörper 194 eines Kugelschraubtriebs aufgenommen. In diesem Mutternkörper 194 sind Gewindegänge ausgebildet. In dem Mutternkörper 194 ist eine Gewindespindel 196 aufgenommen. Durch die Gewindegänge in dem Mutternkörper 194 und in der Gewindespindel 196 ist ein Kugelkanal 198 gebildet. In diesem Kugelkanal 198 sind Kugeln 202 aufgenommen. Die Kugeln 202 bilden eine endlose Kugelschleife, wobei die Enden des durch die Gewindegänge gebildeten Kugelkanals durch einen Rückführkanal 204 verbunden sind. Einzelheiten dieses Kugelschraubtriebs ergeben sich beispielsweise aus der DE PS 29 14 756. Der Mutternkörper 194 ist mit dem Läufer 118 fest verbunden. Die Gewindespindel 196 ist an ihren Enden in Endwänden des Führungsgehäuses 110 drehbar, aber axial unverschiebbar gelagert und mit einem Drehantrieb, insbesondere einem Getriebemotor, verbunden. Der Schmiernippel 188 dient hier auch zur Schmierung des Kugelschraubtriebs. Im übrigen entspricht die Ausführungsform nach Figur 9 derjenigen nach den Figuren 1 bis 8.

## Patentansprüche

1. Linearführungseinheil, umfassend ein längliches Führungsgehäuse (10) mit einer Längsachse und mit einen Führungshohlraum (32) begrenzenden Wänden (10a,10b), nämlich einer Bodenwand (10a) und zwei Seitenwänden (10b), wobei die beiden Seitenwände (10b) zwischen sich eine der Bodenwand (10a) gegenüberliegende Längsöffnung des Führungshohlraums (32) bilden, ferner umfassend eine an der Bodenwand (10a) innerhalb des Führungshohlraums (32) befestigte, achsparallele Führungsschiene (12) und eine auf dieser Führungsschiene (12) rollend geführte und gegen Kippen um die Längsachse gesicherte Läuferbaugruppe (18,20), wobei diese Läuferbaugruppe (18.20) durch die Längsöffnung hindurch mit einem ersten Anschlußteil verbindbar ist, wobei weiter ein Linearantrieb zur Bewegung der Läuferbaugruppe (18,20) in Richtung der Längsachse vorgesehen ist, wobei weiter in der die Führungsschiene (12) teilweise umgreifenden Läuferbaugruppe (18,20) mindestens zwei Wälzkörperumläufe (46) angeordnet sind,
wobei weiter diese Wälzkörperumläufe (46) jeweils eine geradlinige, lastübertragende Wälzkörperreihe (46a) in Eingriff mit einer achsparallelen, lastaufnehmenden Laufbahn (48) der Läuferbaugruppe (18,20) und mit einer achsparallelen, lastaufnehmenden Laufbahn (44) der Führungsschiene (12) und ferner jeweils eine rücklaufende Wälzkörperreihe (46b) sowie zwei Bogenwälzkörperreihen (46c) aufweisen,
**dadurch gekennzeichnet, daß**
a) die Führungsschiene in eine Bodennut in der Bodenwand (10a) eingesetzt und in dieser gegen Ausheben gesichert ist;
b) die Läuferbaugruppe (18,20) einen Läufer (18) und einen Verbindungskörper (20) aufweist;
c) der Läufer (18) eine U-förmige Grundgestalt besitzt, welche mit ihrem Steg (18b) an der befestigungsfemen Seite der Führungsschiene (12) und mit ihren Schenkeln (18a) an den zu der Bodenwand (10a) des Führungsgehäuses (10) im wesentlichen senkrechten Seitenflächen (40) der Führungsschiene benachbart liegt;
d) die Schenkel (18a) des Läufers (18) an dem Steg (18b) einstückig angeordnet sind;
e) der Steg (18b) im wesentlichen Vollquerschnitt besitzt;
f) eine von der Bodenwand (10a) abgelegene Anschlußfläche des Stegs (18b) unterhalb der bodenwandfernen Endflächen (24) der Seitenwände (10b) liegt;
g) auf dieser Anschlußfläche der Verbindungskörper (20) befestigt ist, welcher seinerseits Verbindungsmittel (38) zur Verbindung mit dem ersten Anschlußteil aufweist, und
h) die Verbindung des Linearantriebs mit der Läuferbaugruppe (18,20) im Höhenbereich des Verbindungskörpers (20) hergestellt ist.

2. Linearführungseinheit umfassend ein längliches Führungs-gehäuse (10) mit einer Längsachse und mit einen Führungshohlraum (32) begrenzenden Wänden (10a,10b), nämlich einer Bodenwand (10a) und zwei Seitenwänden (10b), wobei die beiden Seitenwände (10b) zwischen sich eine der Bodenwand (10a) gegenüberliegende Längsöffnung des Führungshohlraums (32) bilden, ferner umfassend eine an der Bodenwand (10a) innerhalb des Führungshohlraums (32) befestigte, achsparallele Führungsschiene (12) und einen auf dieser Führungsschiene (12) rollend geführten und gegen Kippen um die Längsachse gesicherten Läufer (18), wobei dieser Läufer (18) durch die Längsöffnung hindurch mit einem ersten Anschlußteil verbindbar ist,
wobei weiter ein Linearantrieb zur Bewegung des Läufers (18) in Richtung der Längsachse vorgesehen ist,
wobei weiter in dem die Führungsschiene (12) teilweise umgreifenden Läufer (18) mindestens zwei Wälzkörperumläufe (46) vorgesehen sind, wobei weiter diese Wälzkörperumläufe (46) jeweils eine geradlinige, lastübertragende Wälzkörperreihe (46a) in Eingriff mit einer achsparallelen, lastaufnehmenden Laufbahn (48) des Läufers (18) und mit einer achsparallelen, lastaufnehmenden Laufbahn (44) der Führungsschiene (12) und ferner je eine rücklaufende Wälzkörperreihe (46b) sowie zwei Bogenwälzkörperreihen (46c) aufweisen,
wobei waiter der Linearantrieb von einem flexiblen Zugmittel (60) gebildet ist, welches von dem Läufer (18) oder einem mit dem Läufer (18) verbundenen Verbindungskörper (20) ausgehend über je eine Umlenkrolle (56,58) im Bereich beider Enden des Führungsgehäuses (10) zurück zum Läufer (18) bzw. zum Verbindungskörper (20) geführt ist und
wobei das von Umlenkrolle (56) zu Umlenkrolle (58) verlaufende, nicht mit dem Läufer (18) bzw. dem Verbindungskörper (20) verbundene Mitteltrum (60b) des flexiblen Zugmittels (60) außerhalb des Führungshohlraums (32) in einer entlang der Längsachse sich erstreckenden Mitteltrum-Aufnahmekammer (64) des Führungsgehäuses (10) verläuft, welche von der Führungsschiene (12) durch die Bodenwand (10a) getrennt ist
und gewünschtenfalls in Verbindung mit mindestens einem der Merkmale a), c), d), e), f), g) und h) des Anspruchs 1.

3. Linearführungseinheit nach Anspruch 1 oder 2
**dadurch gekennzeichnet,**
**daß** der Verbindungskörper (20) im wesentlichen T-förmig, ausgebildet ist mit einem an den Steg (18b) angrenzenden Mittelschenkel und mit Querschenkeln, welche die von der Bodenwand (10a) abgelegenen Endflächen (24) der Seitenwände (10b) überlagern.

4. Linearführungseinheit nach Anspruch 3,
**dadurch gekennzeichnet,**
**daß** in den überlagernden Teilen der Querschenkel Verbindungsmittel (38) zur Verbindung mit dem ersten Anschlußteil vorgesehen sind.

5. Linearführungseinheit nach einem der Ansprüche 1 - 4,
**dadurch gekennzeichnet,**
**daß** an zwei zueinander annähernd parallelen Seitenflächen (40) der Führungsschiene (12), welche zu der Bodenwand (10a) annähernd senkrecht stehen, je zwei lastaufnehmende Laufbahnen (44) der Führungsschiene (12) für die lastübertragenden Wälzkörperreihen (46a) von insgesamt vier Wälzkörperumläufen (46) angeordnet sind.

6. Linearführungseinheit nach Anspruch 5,
**dadurch gekennzeichnet,**
**daß** die auf ein und derselben Seitenfläche (40) der Führungsschiene (12) gelegenen Laufbahnen (44) der Führungsschiene (12) an den Flanken von jeweils einer in die jeweilige Seitenfläche (40) der Führungsschiene (12) eingearbeiteten achsparallelen Längsnut (42) gebildet sind.

7. Linearführungseinheit nach einem der Ansprüche 1 - 6,
**dadurch gekennzeichnet,**
**daß** der Steg (18b) mit Verbindungsmitteln (22a) zur Verbindung mit dem Verbindungskörper (20) ausgeführt ist.

8. Linearführungseinheit nach einem der Ansprüche 1 - 7,
**dadurch gekennzeichnet,**
**daß** das Führungsgehäuse (10) in bezug auf eine seine Längsachse enthaltende, zu der Bodenwand (10a) senkrechte Symmetrieebene im wesentlichen symmetrisch ausgebildet ist und daß die Läuferbaugruppe (18,20) bezüglich dieser Symmetrieebene ebenfalls im wesentlichen symmetrisch ausgebildet ist.

9. Linearführungseinheit nach einem der Ansprüche 1 -8,
**dadurch gekennzeichnet,**
**daß** die Wände (10a,10b) des Führungsgehäuses (10) an ihren von dem Führungshohlraum (32) abgelegenen Außenflächen Verbindungsmittel (34,36) zur Verbindung mit einem zweiten Anschlußteil tragen.

10. Linearführungseinheit nach einem der Ansprüche 1 - 9,
**dadurch gekennzeichnet,**
**daß** Verbindungsmittel (34,36) der Wände (10a, 10b) und/oder Verbindungsmittel (38) der Läuferbaugruppe (18, 20) als hinterschnittene, zur Längsachse des Führungsgehäuses parallel verlaufende T-Nuten (34,36,38) ausgebildet sind.

11. Linearführungseinheit nach einem der Ansprüche 1 - 10,
**dadurch gekennzeichnet,**
**daß** das Führungsgehäuse (10) als Strangprofil, insbesondere Leichtmetallstrangprofil, hergestellt ist.

12. Linearführungseinheit nach einem der Ansprüche 1 - 11,
**dadurch gekennzeichnet,**
**daß** die Führungsschiene (12) eine Stahlschiene ist.

13. Linearführungseinheit nach einem der Ansprüche 1 - 12,
**dadurch gekennzeichnet,**
**daß** die Führungsschiene (12) mit der Bodenwand (10a) durch Verschraubung oder Verklemmung verbunden ist.

14. Linearführungseinheit nach einem der Ansprüche 1 - 13,
**dadurch gekennzeichnet,**
**daß** die Führungsschiene (12) an der Bodenwand (10a) durch Schraubbolzen (14) befestigt ist, welche die Bodenwand (10a) durchsetzen und an der Außenfläche der Bodenwand (10a) mit Widerlagermitteln (16) zusammenwirken.

15. Linearführungseinheit nach Anspruch 14,
**dadurch gekennzeichnet,**
**daß** die Widerlagermittel (16) von einer Widerlagerschiene (16) gebildet sind, welche sich im wesentlichen über die Länge der Führungsschiene (12) erstreckt.

16. Linearführungseinheit nach Anspruch 15,
**dadurch gekennzeichnet,**
**daß** die Führungsschiene (12) und die Widerlagerschiene (16) aus dem gleichen Material bestehen, so daß Bimetalleffekte vermieden sind.

17. Linearführungseinheit nach Anspruch 1 oder einem der Ansprüche 3 - 16,
**dadurch gekennzeichnet,**
**daß** der Linearantrieb von einem flexiblen Zugmittel (60) gebildet ist, welches von der Läuferbaugruppe (18,20) ausgehend über je eine Umlenkrolle (56,58) im Bereich beider Enden des Führungsgehäuses (10) zurück zur Läuferbaugruppe (18,20) geführt ist.

18. Linearführungseinheit nach Anspruch 17,
**dadurch gekennzeichnet,**
**daß** das flexible Zugmittel (60) offen und mit seinen beiden Enden an der Läuferbaugruppe (18,20) befestigt ist.

19. Linearführungseinheit nach einem der Ansprüche 17 - 18,
**dadurch gekennzeichnet,**
**daß** das von Umlenkrolle (56) zu Umlenkrolle (58) verlaufende, nicht mit der Lauferbaugruppe (18,20) verbundene Mitteltrum (60b) des flexiblen Zugmittels (60) außerhalb des Führungshohlraums (32) verläuft.

20. Linearführungseinheit nach Anspruch 19,
**dadurch gekennzeichnet,**
**daß** das Mitteltrum (60b) in einer entlang der Längsachse sich erstreckenden Mitteltrum-Aufnahmekammer (64) des Führungsgehäuses (10) verläuft.

21. Lineanführungseinheit nach Anspruch 20,
**dadurch gekennzeichnet,**
**daß** die Mitteltrum-Aufnahmekammer (64) von dem Führungshohlraum (32) durch die Bodenwand (10a) getrennt ist.

22. Linearführungseinheit nach Anspruch 2 oder 21
**dadurch gekennzeichnet,**
**daß** die Mitteltrum-Aufnahmekammer (64) an der Bodenwand (10a) zwischen Verbindungsmitteln (34) angeordnet ist, welche an der Außenseite der Bodenwand (10a) angeordnet sind.

23. Linearführungseinheit nach Anspruch 22,
**dadurch gekennzeichnet,**
**daß** eine äußere Begrenzungsplatte (66) der Mitteltrum-Aufnahmekammer (64) derart angeordnet ist, daß sie über die Außenfläche der Bodenwand (10a) im Bereich der Verbindungsmittel (34) nicht vorspringt.

24. Linearführungseinheit nach einem der Ansprüche 20 - 23,
**dadurch gekennzeichnet,**
**daß** die Mitteltrum-Aufnahmekammer (64) - in einem zur Längsachse senkrechten Schnitt betrachtet - eine Öffnung in Richtung des das Führungsgehäuse (10) umschließenden Außenraums besitzt.

25. Linearführungseinheit nach Anspruch 24,
**dadurch gekennzeichnet,**
**daß** die Öffnung der Mitteltrum-Aufnahmekammer (64) durch einen Deckel (66) verschlossen ist.

26. Linearführungseinheit nach Anspruch 25,
**dadurch gekennzeichnet,**
**daß** der Deckel (66) in Deckelhaltenuten (68) des Führunggsgehäuses (10) aufgenommen ist.

27. Linearführungseinheil nach einem der Ansprüche 17 - 26,
**dadurch gekennzeichnet,**
**daß** die zwischen der Läuferbaugruppe (18,20) und den Umlenkrollen (56,58) sich erstreckenden Abschnitte (60a) des flexiblen Zugmittels (60) an ihren in Achsrichtung der Umlenkrollen beabstandeten Rändern durch Profilleisten (28) wenigstens teilweise umgriffen sind.

28. Linearführungseinheit nach Anspruch 27,
**dadurch gekennzeichnet,**
**daß** die Profilleisten (28) an den Seitenwänden (10b) des Führungsgehäuses (10) im Bereich der Längsöfinung angeordnet und aufeinander zu gerichtet sind.

29. Linearführungseinheit nach Anspruch 27 oder 28,
**dadurch gekennzeichnet,**
**daß** die Profilleisten (28) von dem Führungsgehäuse (10) gesondert, insbesondere aus Kunststoff, hergestellt und an dem Führungsgehäuse (10) befestigt sind.

30. Linearführungseinheit nach Anspruch 29,
**dadurch gekennzeichnet,**
**daß** die Profilleisten (28) einen H-Profil-Querschnitt besitzen, wobei die jeweils eine H-Profil-Nut (28a) einen Längsrand des flexiblen Zugmittels (60) umgreitt und die die jeweils andere H-Profil-Nut begrenzenden Profilschenkel mit entsprechenden Randwülsten (30) in T-Nuten (26) des Führungsgehäuses (10) eingerastet sind.

31. Linearführungseinheit nach einem der Ansprüche 17 - 30,
**dadurch gekennzeichnet,**
**daß** das flexible Zugmittel (60) als ein Zahnriemen ausgebildet ist.

32. Linearführungs einheit nach einem der Ansprüche 17 - 30,
**dadurch gekennzeichnet,**
**daß** mindestens eine der Umlenkrollen (56,58) in einem Umlenkrollengehäuse (52,54) untergebracht ist, welches an einer zur Längsachse im wesentlichen senkrechten Endfläche (72) des Führungsgehäuses (10) angeordnet ist.

33. Linearführungseinheit nach Anspruch 32,
**dadurch gekennzeichnet,**
**daß** das Umlenkrollengehäuse (52,54), in einem zur Längsachse des Führungsgehäuses (10) senkrechten Schnitt betrachtet, im wesentliche querschnittsgleich mit der Außenkontur des Führungsgehäuses (10) ist.

34. Linearführungseinheit nach Anspruch 32 oder 33,
**dadurch gekennzeichnet,**
**daß** an mindestens einem Umlenkrollengehäuse (52,54) eine Antriebseinheit befestigt ist.

35. Linearführungseinheit nach einem der Ansprüche 17 - 34,
**dadurch gekennzeichnet,**
**daß** mindestens eine (58) der Umlenkrollen (56,58) in Richtung der Längsachse verstellbar ist.

36. Linearführungseinheit nach einem der Ansprüche 32 - 35,
**dadurch gekennzeichnet,**
**daß** an der Verbindungsstelle zwischen dem Führungsgehäuse (10) und dem Umlenkrollengehäuse (52,54) im Bereich der Längsöffnung des Führungsgehäuses (10) eine mit dem flexiblen Zugmittel (60) zusammenwirkende Dichtung (78) angeordnet ist.

37. Linearfürhungseinheit nach einem der Ansprüche 20 - 36,
**dadurch gekennzeichnet,**
**daß** die Mitteltrum-Aufnahmekammer (64) an mindestens einem Ende in den Innenraum eines Umlenkrollengehäuses (52,54) mündet.

38. Linearführungseinheit nach Anspruch 1 oder einem der Ansprüche 3 - 16,
**dadurch gekennzeichnet,**
**daß** der Linearantrieb (194,196) von einem Spindeltrieb gebildet ist mit einer sich in Längsrichtung des Führungsgehäuses (110) erstreckenden, an dem Führungsgehäuse (110) axial fest und drehbar gelagerten, mit einem Drehantrieb verbundenen Spindel (196) und einem an der Läuferbaugruppe (118,120) befestigten Muttemkörper (194).

39. Linearführungseinheit nach Anspruch 38,
**dadurch gekennzeichnet,**
**daß** der Spindeltrieb (194,196) als Kugelschraubtrieb ausgebildet ist, wobei der Mutternkörper (194) eine durch die Spindel (196) zu einem schraubenförmigen Kugellaufkanal (198) ergänzte innere schraubenförmige Nut aufweist und eine Schar von endlos umlaufenden Kugeln (202) aufnimmt, wobei in dem Mutternkörper (194) ein im wesentlichen axial verlaufender Kugelrückführkanal (204) untergebracht ist und wobei der Mutternkörper (194) in dem auf dem Steg a befestigten Verbindungskörper (120) der Läuferbaugruppe (118,120) aufgenommen ist.

40. Linearführungseinheit nach einem der Ansprüche 1 - 39,
**dadurch gekennzeichnet,**
**daß** das Führungsgehäuse (10) in einer der Seitenwände (10b) eine gewünschtenfalls durch einen Deckel (92) verschließbare Öffnung (90) aufweist, durch welche ein Schmiernippel (88) des Läufers (18) zum Zwecke der Schmiermittelzufuhr zugänglich gemacht werden kann.

41. Linearführungseinheit nach Anspruch 40,
**dadurch gekennzeichnet,**
**daß** der Schmiernippel (188) zur Schmierung von Wälzkörperumläufen (46) und/oder eines Linearantriebs, insbesondere des Mutternkörpers (194) eines Kugelschraubtriebs (194,196), vorgesehen ist.

42. Linearführungseinheit nach einem der Ansprüche 1 - 41,
**dadurch gekennzeichnet,**
**daß** das Führungsgehäuse (10) im Querschnitt betrachtet einen im wesentlichen rechteckigen Umriß besitzt.

43. Linearführungseinheit nach Anspruch 42,
**dadurch gekennzeichnet,**
**daß** der Umriß des Führungsgehäuses (10) im wesentlichen quadratisch ist.

44. Linearführungseinheit nach einem der Ansprüche 1 - 43,
**dadurch gekennzeichnet,**
**daß** das als Strangprofil hergestellte Führungsgehäuse (10) im Übergangsbereich zwischen der Bodenwand (10a) und den Seitenwänden (10b) mit Hohlräumen (80) versehen ist.

45. Linearführungseinheit nach Anspruch 44,
**dadurch gekennzeichnet,**
**daß** die Hohlräume (80) zum Führungshohlraum (32) hin durch Wandteile begrenzt sind, welche von der Bodenwand (10a) zu den Seitenwänden (10b) schräg verlaufen.

46. Linearführungseinheit nach Anspruch 45,
**dadurch gekennzeichnet,**
**daß** die schräg verlaufenden Wandteile an Außenabschrägungen der Schenkel (18a) der Läuferbaugruppe (18) angenähert sind.

47. Führungsgehäuse für eine Linearführungseinheit,
wobei dieses Führungsgehäuse (10) einen Führungshohlraum (32) begrenzende Wände (10a,10b), nämlich eine Bodenwand (10a) und zwei Seitenwände (10b), aufweist,
wobei weiter die beiden Seitenwände (10b) zwischen sich eine der Bodenwand (10a) gegenüberliegende Längsöffnung des Führungshohlraums bilden,
wobei weiter an der Bodenwand (10a) innerhalb des Führungshohlraums (32) eine Bodennut und Befestigungsmittel (14,16) für eine Führungsschiene (12) zur Führung eines Läufers (18) vorgesehen sind und wobei weiter an dem Führungsgehäuse (10) Anbringungsstellen für einen Linearantrieb zur Bewegung des Läufers (18) in Richtung einer Längsachse des Führungsgehäuses (10) vorgesehen sind,
**dadurch gekennzeichnet,**
**daß** die Bodennut so gestaltet ist, daß in die Bodennut die Führungsschiene eingesetzt und in dieser gegen Ausheben gesichert werden kann, und daß an der vom Führungshohlraum (32) abgelegenen Seite der Bodenwand (10a) eine zusätzliche, in Richtung der Längsachse sich erstreckende Profilkammer (64) vorgesehen ist, welche im Falle der Ausführung des Linearantriebs mit einem flexiblen Zugmittel (60) als Mitteltrum-Aufnahmekammer (64) für das Mitteltrum (60b) des zusammen mit dem Läufer (18) oder einem auf dem Läufer (18) befestigten Verbindungskörper (20) eine Schleife bildenden flexiblen Zugmittels (60) verwendet werden kann.

## Claims

1. Linear guidance unit, comprising an elongated guide housing (10) with a longitudinal axis and with walls (10a, 10b) defining a guide cavity (32), namely a bottom wall (10a) and two side walls (10b), the two side walls (10b) forming between them, opposite the bottom wall (10a), a longitudinal opening in the guide cavity (32), furthermore comprising an axis parallel guide rail (12) attached to the bottom wall (10a) within the guide cavity (32) and a traveller assembly (18, 20) guided to roll on this guide rail (12) and secured against tilting about the longitudinal axis, this traveller assembly (18, 20) being able to be connected through the longitudinal opening to a first connection part, furthermore a linear drive being provided for propelling the traveller assembly (18, 20) in the direction of the longitudinal axis, furthermore at least two rolling element races (46) being located in the traveller assembly (18, 20) engaging partially around the guide rail (12), furthermore these rolling element races (46) respectively comprising a rectilinear load-transmitting row (46a) of rolling elements in engagement with an axis parallel load-receiving track (48) of the traveller assembly (18, 20) and with an axis parallel load-receiving track (44) of the guide rail (12) and furthermore respectively a returning row (46b) of rolling elements as well as two arcuate rows (46c) of rolling elements, **characterised in that**
a) the guide rail is inserted in a bottom groove in the bottom wall (10a) and is prevented from lifting in the latter;
b) the traveller assembly (18, 20) comprises a traveller (18) and a connecting member (20);
c) the traveller (18) is basically U-shaped, its web (18b) being adjacent to the side of the guide rail (12) which is remote from the fixing side and its arms (18a) being adjacent to the side faces (40) of the guide rail which are substantially at right angles to the bottom wall (10a) of the guide housing (10);
d) the arms (18a) of the traveller (18) are arranged in one piece on the web (18b);
e) the web (18b) has a substantially solid cross-section;
f) a connection surface of the web (18b) remote from the bottom wall (10a) lies below the end faces (24) of the side walls (10b) remote from the bottom wall;
g) attached to this connection surface is the connecting member (20), which in turn comprises connection means (38) for connection to the first connection part, and
h) the connection of the linear drive to the traveller assembly (18, 20) is made in the level range of the connection member (20).

2. Linear guidance unit comprising an elongated guide housing (10) with a longitudinal axis and with walls (10a, 10b) defining a guide cavity (32), namely a bottom wall (10a) and two side walls (10b), the two side walls (10b) forming between them, opposite the bottom wall (10a), a longitudinal opening in the guide cavity (32), furthermore comprising an axis parallel guide rail (12) attached to the bottom wall (10a) inside the guide cavity (32) and a traveller (18) guided to roll on this guide rail (12) and secured against tilting about the longitudinal axis, this traveller (18) being able to be connected through the longitudinal opening to a first connection part, furthermore a linear drive being provided for propelling the traveller (18) in the direction of the longitudinal axis, furthermore at least two rolling element races (46) being provided in the traveller (18) engaging partially around the guide rail (12), furthermore these rolling element races (46) comprising respectively a rectilinear, load-transmitting row (46a) of rolling elements in engagement with an axis parallel, load-receiving track (48) of the traveller (18) and with an axis parallel, load-receiving track (44) of the guide rail (12) and furthermore respectively a returning row (46b) of rolling elements as well as two arcuate rows (46c) of rolling elements, furthermore the linear drive being formed by flexible traction means (60), which, starting from the traveller (18) or a connecting member (20) connected to the traveller (18), is guided over respectively one deflecting pulley (56, 58) in the region of both ends of the guide housing (10) back to the traveller (18) or to the connecting member (20) the middle strand (60b) of the flexible traction means (60) extending from the deflecting pulley (56) to the deflecting pulley (58) and not connected to the traveller (18) or to the connecting member (20) extending outside the guide cavity (32) in a middle strand receiving chamber (64) of the guide housing (10) extending along the longitudinal axis, which chamber is separated from the guide rail (12) by the bottom wall (10a) and if desired in conjunction with at least one of the features a), c), d), e), f), g) and h) of Claim 1.

3. Linear guidance unit according to Claim 1 or 2, **characterised in that** the connecting member (20) is substantially T-shaped with a middle arm adjoining the web (18b) and with transverse arms, which overlie the end faces (24) of the side walls (10b) which are remote from the bottom wall (10a).

4. Linear guidance unit according to Claim 3, **characterised in that** provided in the overlying parts of the transverse arms are connecting means (38) for connection to the first connection part.

5. Linear guidance unit according to one of Claims 1 to 4, **characterised in that** located on two approximately parallel side faces (40) of the guide rail (12), which are approximately at right angles to the bottom wall (10a) are respectively two load-receiving tracks (44) of the guide rail (12) for the load-transmitting rows (46a) of rolling elements of altogether four rolling element races (46).

6. Linear guidance unit according to Claim 5, **characterised in that** the tracks (44) of the guide rail (12) located on one and the same side face (40) of the guide rail (12) are formed on the flanks of respectively one axis parallel longitudinal groove (42) machined into the respective side face (40) of the guide rail (12).

7. Linear guidance unit according to one of Claims 1 to 6, **characterised in that** the web (18b) is constructed with connecting means (22a) for connection to the connecting member (20).

8. Linear guidance unit according to one of Claims 1 to 7, **characterised in that** with respect to a plane of symmetry, which is perpendicular to the bottom wall (10a) and contains its longitudinal axis, the guide housing (10) is of substantially symmetrical construction and that the traveller assembly (18, 20) is likewise substantially symmetrical in construction with respect to this plane of symmetry.

9. Linear guidance unit according to one of Claims 1 to 8, **characterised in that** the walls (10a, 10b) of the guide housing (10) have on their outer surfaces remote from the guide cavity (32), connection means (34, 36) for connection to a second connection part.

10. Linear guidance unit according to one of Claims 1 to 9, **characterised in that** connection means (34, 36) of the walls (10a, 10b) and/or connecting means (38) of the traveller assembly (18, 20) are constructed as undercut, T-shaped grooves (34, 36, 38) extending parallel to the longitudinal axis of the guide housing.

11. Linear guidance unit according to one of Claims 1 to 10, **characterised in that** the guide housing (10) is produced as an extruded section, particularly an extruded light metal section.

12. Linear guidance unit according to one of Claims 1 to 11, **characterised in that** the guide rail (12) is a steel rail.

13. Linear guidance unit according to one of Claims 1 to 12, **characterised in that** the guide rail (12) is connected to the bottom wall (10a) by screwing or clamping.

14. Linear guidance unit according to one of Claims 1 to 13, **characterised in that** the guide rail (12) is fixed to the bottom wall (10a) by screw bolts (14), which traverse the bottom wall (10a) and cooperate with abutment means (16) on the outside of the bottom wall (10a).

15. Linear guidance unit according to Claim 14, **characterised in that** the abutment means (16) are formed by an abutment rail (16), which extends essentially over the length of the guide rail (12).

16. Linear guidance unit according to Claim 15, **characterised in that** the guide rail (12) and the abutment rail (16) consist of the same material, so that bimetallic effects are avoided.

17. Linear guidance unit according to Claim 1 or one of Claims 3 to 16, **characterised in that** the linear drive is formed by flexible traction means (60), which, starting from the traveller assembly (18, 20), are guided over respectively one deflecting pulley (56, 58) in the region of both ends of the guide housing (10) back to the traveller assembly (18, 20).

18. Linear guidance unit according to Claim 17, **characterised in that** the flexible traction means (60) are open and are attached by their two ends to the traveller assembly (18, 20).

19. Linear guidance unit according to one of Claims 17 to 18, **characterised in that** the middle strand (60b) of the flexible traction means (60) extending from the deflecting pulley (56) to the deflecting pulley (58) and not connected to the traveller assembly (18, 20), extend outside the guide cavity (32).

20. Linear guidance unit according to Claim 19, **characterised in that** the middle strand (60b) extends in a middle strand receiving chamber (64) of the guide housing (10), which extends along the longitudinal axis.

21. Linear guidance unit according to Claim 20, **characterised in that** the middle strand receiving chamber (64) is separated from the guide cavity (32) by the bottom wall (10a).

22. Linear guidance unit according to Claim 2 or 21, **characterised in that** the middle strand receiving chamber (64) is located on the bottom wall (10a) between connecting means (34), which are located on the outside of the bottom wall (10a).

23. Linear guidance unit according to Claim 22, **characterised in that** an outer boundary plate (66) of the middle strand receiving chamber (64) is arranged so that it does not project beyond the outer surface of the bottom wall (10a) in the region of the connecting means (34).

24. Linear guidance unit according to one of Claims 20 to 23, **characterised in that** seen in a section at right angles to the longitudinal axis, the middle strand receiving chamber (64) has an opening in the direction of the outer space enclosing the guide housing (10).

25. Linear guidance unit according to Claim 24, **characterised in that** the opening of the middle strand receiving chamber (64) is closed by a cover (66).

26. Linear guidance unit according to Claim 25, **characterised in that** the cover (66) is accommodated in cover-retaining grooves (68) in the guide housing (10).

27. Linear guidance unit according to one of Claims 7 to 26, **characterised in that** the sections (60a) of the flexible traction means (60) extending between the traveller assembly (18, 20) and the deflecting pulleys (56, 58) are at least partially surrounded by profile strips (28) on their edges spaced apart in the axial direction of the deflecting pulleys.

28. Linear guidance unit according to Claim 27, **characterised in that** the profile strips (28) are arranged on the side walls (10b) of the guide housing (10) in the region of the longitudinal opening and point towards each other.

29. Linear guidance unit according to Claim 27 or 28, **characterised in that** the profile strips (28) are made from, in particular, synthetic material separately from the guide housing (10) and are attached to the guide housing (10).

30. Linear guidance unit according to Claim 29, **characterised in that** the profile strips (28) have an H-shaped profile cross-section, respectively one groove (28a) of the H-shaped profile engaging around a longitudinal edge of the flexible traction means (60) and the profile arm defining the respectively other groove of the H-shaped profile being engaged by corresponding marginal beads (30) in T-shaped grooves (26) in the guide housing (10).

31. Linear guidance unit according to one of Claims 7 to 30, **characterised in that** the flexible traction means (60) are constructed as a toothed belt.

32. Linear guidance unit according to one of Claims 7 to 30, **characterised in that** at least one of the deflecting pulleys (56, 58) is accommodated in a deflecting pulley housing (52, 54), which is disposed on an end face (72) of the guide housing (10) which is substantially at right angles to the longitudinal axis.

33. Linear guidance unit according to Claim 32, **characterised in that** the deflecting pulley housing (52, 54), viewed in a cross-section at right angles to the longitudinal axis of the guide housing (10), is of substantially the same cross-section as the outer contour of the guide housing (10).

34. Linear guidance unit according to Claim 32 or 33, **characterised in that** a drive unit is fastened on at least one deflecting pulley housing (52, 54).

35. Linear guidance unit according to one of Claims 7 to 34, **characterised in that** at least one (58) of the deflecting pulleys (56, 58) is adjustable in the direction of the longitudinal axis.

36. Linear guidance unit according to one of Claims 32 to 35, **characterised in that** at the junction between the guide housing (10) and the deflecting pulley housing (52, 54) there is located in the region of the longitudinal opening in the guide housing (10) a gasket (78) cooperating with the flexible traction means (60).

37. Linear guidance unit according to one of Claims 20 to 36, **characterised in that** at least at one end, the middle strand receiving chamber (64) opens into the interior of a deflecting pulley housing (52, 54).

38. Linear guidance unit according to Claim 1 or one of Claims 3 to 16, **characterised in that** the linear drive (194, 196) is formed by a worm drive with, extending in the longitudinal direction of the guide housing (110), a spindle (196) connected to a rotary drive and mounted in an axially rigid and rotatable manner on the guide housing (110), and with a nut body (194) mounted on the traveller assembly (118, 120).

39. Linear guidance unit according to Claim 38, **characterised in that** the worm drive (194, 196) is constructed as a ball and worm drive, the nut body (194) comprising an inner helical groove supplemented by the spindle (196) to constitute a helical ball race (198) and holding a number of endlessly rotating balls (202), a substantially axially extending ball return race (204) being housed in the nut body (194) and the nut body (194) being received in the connecting body (120) of the traveller assembly (118, 120) attached to the web a.

40. Linear guidance unit according to one of Claims 1 to 39, **characterised in that** in one of the side walls (10b), the guide housing (10) comprises an opening (90) able to be closed by a cover (92) if desired, through which opening a lubricating nipple (88) of the traveller (18) can be made accessible for the purpose of supplying lubricant.

41. Linear guidance unit according to Claim 40, **characterised in that** the lubricating nipple (188) is provided for lubricating rolling element races (46) and/or a linear drive, in particular of the nut body (194) of a ball and worm drive (194, 196).

42. Linear guidance unit according to one of Claims 1 to 41, **characterised in that** viewed in cross-section, the guide housing (10) has a substantially rectangular contour.

43. Linear guidance unit according to Claim 42, **characterised in that** the contour of the guide housing (10) is substantially square.

44. Linear guidance unit according to one of Claims 1 to 43, **characterised in that** the guide housing (10) constructed as an extruded section is provided with cavities (80) in the transition region between the bottom wall (10a) and the side walls (10b).

45. Linear guidance unit according to Claim 44, **characterised in that** the cavities (80) are defined towards the guide cavity (32) by wall portions, which extend obliquely from the bottom wall (10a) to the side walls (10b).

46. Linear guidance unit according to Claim 45, **characterised in that** the obliquely extending wall portions approach external bevels of the arms (18a) of the traveller assembly (18).

47. Guide housing for a linear guidance unit, this guide housing (10) comprising walls (10a, 10b) defining a guide cavity (32), namely a bottom wall (10a) and two side walls (10b), furthermore the two side walls (10b) forming between them, opposite the bottom wall (10a), a longitudinal opening in the guide cavity, there being furthermore provided on the bottom wall (10a) within the guide cavity (32), a bottom groove and fastening means (14, 16) for a guide rail (12) for guiding a traveller (18) and there furthermore being provided on the guide housing (10), locating points for a linear drive for propelling the traveller (18) in the direction of a longitudinal axis of the guide housing (10), **characterised in that** the bottom groove is designed so that the guide rail is inserted in the bottom groove and in the latter can be prevented from lifting and that provided on the side of the bottom wall (10a) remote from the guide cavity (32) is an additional profiled chamber (64) extending in the direction of the longitudinal axis, which in the case of the construction of the linear drive with flexible traction means (60), can be used as a middle strand receiving chamber (64) for the middle strand (60b) of the flexible traction means (60) forming a loop together with the traveller (18) or a connecting member (20) attached to the traveller (18).

## Revendications

1. Unité de guidage linéaire, comportant un boîtier de guidage (10) allongé avec un axe longitudinal et avec des parois (10a, 10b), à savoir une paroi de fond (10a) et deux parois latérales (10b), délimitant une cavité de guidage (32), les deux parois latérales (10b) formant entre elles une ouverture longitudinale, opposée à la paroi de fond (10a), de la cavité de guidage (32), comportant en outre un rail de guidage (12) parallèle à l'axe, fixé sur la paroi de fond (10a) à l'intérieur de la cavité de guidage (32) et un ensemble chariot (18, 20) monté roulant sur ce rail de guidage (12) et bloqué contre un basculement autour de l'axe longitudinal, cet ensemble chariot (18, 20) pouvant être relié à travers l'ouverture longitudinale avec un premier élément de raccord, un entraînement linéaire pour le déplacement de l'ensemble chariot (18, 20) dans la direction de l'axe longitudinal étant prévu en outre, deux circuits de corps de roulement (46), au moins, étant en outre disposés dans l'ensemble chariot (18, 20) entourant partiellement le rail de guidage (12),
ces circuits de corps de roulement (46) présentant en outre chacun une rangée de corps de roulement (46a) rectiligne, transmettant la charge en prise avec une piste de roulement (48) parallèle à l'axe, absorbant la charge, de l'ensemble chariot (18, 20) et avec une piste de roulement (44) parallèle à l'axe, absorbant la charge, du rail de guidage (12) ainsi qu'en outre chacun une rangée de corps de roulement (46b) de retour et deux rangées de corps de roulement en arc (46c),
**caractérisée en ce que**
a) le rail de guidage est inséré dans une rainure de fond dans la paroi de fond (10a) et est bloqué dans celle-ci contre un soulèvement ;
b) l'ensemble chariot (18, 20) comporte un chariot (18) et un corps de liaison (20) ;
c) le chariot (18) présente une forme de base en U, qui avec son dos (18b) est voisine du côté éloigné de la fixation du rail de guidage (12) et avec ses branches (18a) est voisine des surfaces latérales (40) du rail de guidage, sensiblement orthogonales à la paroi de fond (10a) du boîtier de guidage (10) ;
d) les branches (18a) du chariot (18) sont réalisées d'un seul tenant avec le dos (18b) ;
e) le dos (18b) possède pour l'essentiel une section transversale pleine ;
f) une face de raccord du dos (18b), éloignée de la paroi de fond (10a), se situe au-dessous des faces terminales (24b), éloignées du fond, des parois latérales (10b) ;
g) sur cette face de raccord est fixé le corps de liaison (20), qui de son côté comporte des moyens de liaison (38) pour la liaison avec le premier élément de raccord et
h) la liaison de l'entraînement linéaire avec l'ensemble chariot (18, 20) est réalisée dans la zone située en hauteur du corps de liaison (20).

2. Unité de guidage linéaire, comportant un boîtier de guidage (10) allongé avec un axe longitudinal et avec des parois (10a, 10b), à savoir une paroi de fond (10a) et deux parois latérales (10b), délimitant une cavité de guidage (32), les deux parois latérales (10b) formant entre elles une ouverture longitudinale, opposée à la paroi de fond (10a), de la cavité de guidage (32), comportant en outre un rail de guidage (12) parallèle à l'axe, fixé sur la paroi de fond (10a) à l'intérieur de la cavité de guidage (32) et un chariot (18) monté roulant sur ce rail de guidage (12) et bloqué contre un basculement autour de l'axe longitudinal, ce chariot (18) pouvant être relié à travers l'ouverture longitudinale avec un premier élément de raccord, un entraînement linéaire pour le déplacement du chariot (18) dans la direction de l'axe longitudinal étant prévu en outre, deux circuits de corps de roulement (46), au moins, étant en outre disposés dans le chariot (18) entourant partiellement le rail de guidage (12),
ces circuits de corps de roulement (46) présentant en outre chacun une rangée de corps de roulement (46a) rectiligne, transmettant la charge en prise avec une piste de roulement (48) parallèle à l'axe, absorbant la charge, du chariot (18) et avec une piste de roulement (44) parallèle à l'axe, absorbant la charge, du rail de guidage (12) ainsi qu'en outre chacun une rangée de corps de roulement (46b) de retour et deux rangées de corps de roulement en arc (46c),
l'entraînement linéaire étant formé en outre par un moyen de traction (60) flexible, qui, partant du chariot (18) ou d'un corps de liaison (20) relié au chariot (18), retourne, par une poulie de renvoi (56, 58) dans la région des deux extrémités du boîtier de guidage (10), vers le chariot (18) ou le corps de liaison (20) et le brin central (60b), s'étendant de la poulie de renvoi (56) à la poulie de renvoi (58), non relié au chariot (18) ou au corps de liaison (20), du moyen de traction (60) flexible, s'étendant à l'extérieur de la cavité de guidage (32), dans une chambre de logement du brin central (64), s'étendant le long de l'axe longitudinal, du boîtier de guidage (10), laquelle est séparée du rail de guidage (12) par la paroi de fond (10a), et éventuellement en liaison avec au moins l'une des caractéristiques a), c) , d), e), f), g) et h) de la revendication 1.

3. Unité de guidage linéaire selon la revendication 1 ou 2, **caractérisée en ce que** le corps de liaison (20) est sensiblement en forme de T avec une branche centrale adjacente au dos (18b) et avec des branches transversales, qui se superposent aux faces terminales (24), éloignées de la paroi de fond (10a), des parois latérales (10b).

4. Unité de guidage linéaire selon la revendication 3, **caractérisée en ce que** dans les parties de superposition des branches transversales sont prévus des moyens de liaison (38) pour la liaison avec le premier élément de raccord.

5. Unité de guidage linéaire selon l'une des revendications 1 à 4, **caractérisée en ce que** sur deux faces latérales (40) sensiblement parallèles entre elles, du rail de guidage (12), qui sont approximativement perpendiculaires à la paroi de fond (10a), sont prévues deux pistes de roulement (44) absorbant la charge du rail de guidage (12) pour les rangées de corps de roulement (46a) transmettant la charge de quatre circuits de corps de roulement (46) au total.

6. Unité de guidage linéaire selon la revendication 5, **caractérisée en ce que** les pistes de roulement (44) du rail de guidage (12), situées sur une seule et même face latérale (40) du rail de guidage (12), sont formées sur les flancs d'une rainure longitudinale (42) parallèle à l'axe, pratiquée dans la face latérale (40) respective du rail de guidage (12).

7. Unité de guidage linéaire selon l'une des revendications 1 à 6, **caractérisée en ce que** le dos (18b) est réalisé avec des moyens de liaison (22a) pour la liaison avec le corps de liaison (20).

8. Unité de guidage linéaire selon l'une des revendications 1 à 7, **caractérisée en ce que** le boîtier de guidage (10) est configuré sensiblement symétrique par rapport à un plan de symétrie contenant son axe longitudinal, et perpendiculaire à la paroi de fond (10a) et **en ce que** l'ensemble chariot (18, 20) est également sensiblement symétrique par rapport à ce plan de symétrie.

9. Unité de guidage linéaire selon l'une des revendications 1 à 8, **caractérisée en ce que** les parois (10a, 10b) du boîtier de guidage (10) portent, sur leur face extérieure éloignée de la cavité de guidage (32), des moyens de liaison (34, 36) pour la liaison avec un second élément de raccord.

10. Unité de guidage linéaire selon l'une des revendications 1 à 9, **caractérisée en ce que** des moyens de liaison (34, 36) des parois (10a, 10b) et/ou des moyens de liaison (38) de l'ensemble chariot (18, 20), sont configurés en rainures en T (34, 36, 38) détalonnées, s'étendant parallèlement à l'axe longitudinal du boîtier de guidage.

11. Unité de guidage linéaire selon l'une des revendications 1 à 10, **caractérisée en ce que** le boîtier de guidage (10) est réalisé en profilés extrudés, en particulier en profilés extrudés en métal léger.

12. Unité de guidage linéaire selon l'une des revendications 1 à 11, **caractérisée en ce que** le rail de guidage (12) est un rail en acier.

13. Unité de guidage linéaire selon l'une des revendications 1 à 12, **caractérisée en ce que** le rail de guidage (12) est relié avec la paroi de fond (10a), par vissage ou serrage.

14. Unité de guidage linéaire selon l'une des revendications 1 à 13, **caractérisée en ce que** le rail de guidage (12) est fixé sur la paroi de fond (10a) par des boulons (14), qui traversent la paroi de fond (10a) et qui coopèrent, sur la face extérieure de la paroi de fond (10a), avec des moyens de butée (16).

15. Unité de guidage linéaire selon la revendication 14, **caractérisée en ce que** les moyens de butée (16) sont formés par un rail de butée (16), qui s'étend sensiblement sur la longueur du rail de guidage (12).

16. Unité de guidage linéaire selon la revendication 15, **caractérisée en ce que** le rail de guidage (12) et le rail de butée (16) sont réalisés dans le même matériau, ce qui est évite des effets bimétalliques.

17. Unité de guidage linéaire selon la revendication 1 ou l'une des revendications 3 à 16, **caractérisée en ce que** l'entraînement linéaire est formé par un moyen de traction flexible (60), qui, partant de l'ensemble chariot (18, 20), passe par une poulie de renvoi (56, 58) dans la région de chacune des deux extrémités du boîtier de guidage (10) pour retourner vers l'ensemble chariot (18, 20).

18. Unité de guidage linéaire selon la revendication 17, **caractérisée en ce que** le moyen de traction flexible (60) est ouvert et est fixé avec ses deux extrémités sur l'ensemble chariot (18, 20).

19. Unité de guidage linéaire selon l'une des revendications 17 ou 18, **caractérisée en ce que** le brin central (60b), s'étendant de la poulie de renvoi (56) à la poulie de renvoi (58), non relié avec l'ensemble chariot (18, 20), du moyen de traction flexible (60), s'étend à l'extérieur de la cavité de guidage (32).

20. Unité de guidage linéaire selon la revendication 19, **caractérisée en ce que** du brin central (60b) s'étend dans une chambre de logement du brin central (64), s'étendant le long de l'axe longitudinal, du boîtier de guidage (10).

21. Unité de guidage linéaire selon la revendication 20, **caractérisée en ce que** la chambre de logement du brin central (64) est séparée de la cavité de guidage (32) par la paroi de fond (10a).

22. Unité de guidage linéaire selon les revendications 1, 2 ou 21, **caractérisée en ce que** la chambre de logement du brin central (64) est située sur la paroi de fond (10a), entre des moyens de liaison (34) qui sont situés sur le côté extérieur de la paroi de fond (10a).

23. Unité de guidage linéaire selon la revendication 22, **caractérisée en ce qu'**une plaque de délimitation extérieure (66) de la chambre de logement du brin central (64) est disposée de manière à ne pas faire saillie de la face extérieure de la paroi de fond (10a), dans la zone des moyens de liaison (34).

24. Unité de guidage linéaire selon l'une des revendications 20 à 23, **caractérisée en ce que** la chambre de logement du brin central (64) - vue en coupe perpendiculaire à l'axe longitudinal - possède une ouverture en direction du volume extérieur entourant le boîtier de guidage (10).

25. Unité de guidage linéaire selon la revendication 24, **caractérisée en ce que** l'ouverture de la chambre de logement du brin central (64) est fermée par un couvercle (66).

26. Unité de guidage linéaire selon la revendication 25, **caractérisée en ce que** le couvercle (66) est logé dans des rainures de retenue de couvercle (68) du boîtier de guidage (10).

27. Unité de guidage linéaire selon l'une des revendications 17 à 26, **caractérisée en ce que** les portions (60a) du moyen de traction flexible (60), s'étendant entre l'ensemble chariot (18, 20) et les poulies de renvoi (56, 58), sont entourées, au moins partiellement, par des baguettes profilées (28), sur leurs bords espacés axialement des poulies de renvoi.

28. Unité de guidage linéaire selon la revendication 27, **caractérisée en ce que** les baguettes profilées (28) sont placées sur les parois latérales (10b) du boîtier de guidage (10), dans la région de l'ouverture longitudinale, et sont orientées les unes vers les autres.

29. Unité de guidage linéaire selon la revendication 27 ou 28, **caractérisée en ce que** les baguettes profilées (28) sont réalisées séparément du boîtier de guidage (10), en particulier en matière synthétique et sont situées sur le boîtier de guidage (10).

30. Unité de guidage linéaire selon la revendication 29, **caractérisée en ce que** les baguettes profilées (28) possèdent une section transversale de profil en H, une rainure de profil en H (28a) entourant un bord longitudinal du moyen de traction flexible (60) et les branches du profilé, délimitant l'autre rainure de profil en H, étant accrochées par des bourrelets de bordure (30) correspondants, dans des rainures en T (26) du boîtier de guidage (10).

31. Unité de guidage linéaire selon l'une des revendications 17 à 30, **caractérisée en ce que** le moyen de traction flexible (60) est configuré en courroie crantée.

32. Unité de guidage linéaire selon l'une des revendications 17 à 30, **caractérisée en ce que** l'une au moins des poulies de renvoi (56, 58) est logée dans un boîtier de poulie de renvoi (52, 54), qui est placé sur une face terminale (72), sensiblement perpendiculaire à l'axe longitudinal, du boîtier de guidage (10).

33. Unité de guidage linéaire selon la revendication 32, **caractérisée en ce que** le boîtier de poulie de renvoi (52, 54), vu en coupe perpendiculaire à l'axe longitudinal du boîtier de guidage (10) a une section transversale sensiblement identique au contour extérieur du boîtier de guidage (10).

34. Unité de guidage linéaire selon la revendication 32 ou 33, **caractérisée en ce qu'**une unité d'entrainement est fixée sur au moins un boîtier de poulie de renvoi (52, 54).

35. Unité de guidage linéaire selon l'une des revendications 17 à 34, **caractérisée en ce que** l'une (58) au moins des poulies de renvoi (56, 58) est réglable dans la direction de l'axe longitudinal.

36. Unité de guidage linéaire selon l'une des revendications 32 à 35, **caractérisée en ce qu'**au point de liaison entre le boîtier de guidage (10) et le boîtier de poulie de renvoi (52, 54), il est prévu, dans la région de l'ouverture longitudinale du boîtier de guidage (10), une étanchéité (78) coopérant avec le moyen de traction flexible (60).

37. Unité de guidage linéaire selon l'une des revendications 20 à 36, **caractérisée en ce que** la chambre de logement du brin central (64) débouche à au moins une extrémité dans le volume intérieur d'un boîtier de poulie de renvoi (52, 54).

38. Unité de guidage linéaire selon la revendication 1 ou l'une des revendications 3 à 16, **caractérisée en ce que** l'entraînement linéaire (194, 196) est formé par un mécanisme à vis avec une vis (196) s'étendant dans la direction longitudinale du boîtier de guidage (110), montée axialement fixe et tournante sur le boîtier de guidage (110), reliée à un mécanisme d'entraînement en rotation, et avec un corps d'écrou (194), fixé sur l'ensemble chariot (118, 120).

39. Unité de guidage linéaire selon la revendication 38, **caractérisée en ce que** le mécanisme à vis (194, 196) est configuré en mécanisme à vis et billes, le corps d'écrou (194) présentant une rainure hélicoïdale intérieure, complétée par la vis (196) pour former un canal de circulation de billes (198) hélicoïdal et logeant un ensemble de billes (202) circulant sans fin, un canal de retour de billes (204) s'étendant sensiblement axialement, étant logé dans le corps d'écrou (194) et le corps d'écrou (194) étant logé dans le corps de liaison (120), fixé sur le dos de l'ensemble chariot (118, 120).

40. Unité de guidage linéaire selon l'une des revendications 1 à 39, **caractérisée en ce que** le boîtier de guidage (10) présente, dans l'une des parois latérales (10b), une ouverture (90) pouvant éventuellement être fermée par un couvercle (92), par laquelle un raccord fileté de lubrification (88) du chariot (18) peut être rendu accessible pour l'arrivée du lubrifiant.

41. Unité de guidage linéaire selon la revendication 40, **caractérisée en ce que** le raccord fileté de lubrification (188) est prévu pour la lubrification de circuits de corps de roulement (46) et/ou un entraînement linéaire, en particulier du corps d'écrou (194) d'un mécanisme à vis et billes (194, 196).

42. Unité de guidage linéaire selon l'une des revendications 1 à 41, **caractérisée en ce que** le boîtier de guidage (10), vu en coupe transversale, possède un contour sensiblement rectangulaire.

43. Unité de guidage linéaire selon la revendication 42, **caractérisée en ce que** le contour du boîtier de guidage (10) est sensiblement carré.

44. Unité de guidage linéaire selon l'une des revendications 1 à 43, **caractérisée en ce que** le boîtier de guidage (10), réalisé sous forme de profilé extrudé, est pourvu, dans la zone de transition entre la paroi de fond (10a) et les parois latérales (10b), de cavités (80).

45. Unité de guidage linéaire selon la revendication 44, **caractérisée en ce que** les cavités (80) sont délimitées, vers la cavité de guidage (32), par des parties de paroi qui s'étendent obliquement de la paroi de fond (10a) vers les parois latérales (10b).

46. Unité de guidage linéaire selon la revendication 45, **caractérisée en ce que** les parties de paroi s'étendant obliquement sont rapprochées de chanfreins extérieurs des branches (18a) de l'ensemble chariot (18).

47. Boîtier de guidage pour une unité de guidage linéaire, ce boîtier de guidage (10) comportant des parois (10a, 10b), à savoir une paroi de fond (10a) et deux parois latérales (10b), délimitant une cavité de guidage (32), les deux parois latérales (10b) formant en outre entre elles une ouverture longitudinale, opposée à la paroi de fond (10a), de la cavité de guidage, une rainure de fond et des moyens de fixation (14, 16), pour un rail de guidage (12) destiné à guider un chariot (18), étant en outre prévus sur la paroi de fond (10a), à l'intérieur de la cavité de guidage (32), et des points de fixation d'un entraînement linéaire, pour le déplacement du chariot (18) dans la direction d'un axe longitudinal du boîtier de guidage (10), étant en outre prévus sur le boîtier de guidage (10), **caractérisé en ce que** la rainure de fond est telle que le rail de guidage peut être inséré dans la rainure de fond et être bloqué dans celle-ci contre un soulèvement, et **en ce que** sur le côté de la paroi de fond (10a) éloigné de la cavité de guidage (32), il est prévu une chambre profilée (64) supplémentaire, s'étendant dans la direction de l'axe longitudinal, qui, dans le cas où l'entraînement linéaire est réalisé avec un moyen de traction flexible (60), peut être utilisée comme chambre de logement du brin central (64) pour le brin central (60b) du moyen de traction flexible (60), formant une boucle avec le chariot (18) ou avec un corps de liaison (20), fixé sur le chariot (18).
